# FASCICULE DE BREVET EUROPEEN

(11) **EP 2 353 061 B1**
(45) Date de publication et mention de la délivrance du brevet: **17.05.2017**
(21) Numéro de dépôt: 09752783.2
(22) Date de dépôt: 02.11.2009
(51) Int. Cl.: G06F 3/02, H01H 13/702, H01H 13/83, H01H 13/86, H04M 1/22, H04M 1/23

(54) **CLAVIER RETROECLAIRE ETANCHE**
VERSIEGELTES HINTERGRUNDBELEUCHTETES TASTENFELD
SEALED BACKLIT KEYPAD

(30) Priorité: 28.11.2008 FR 0806706
(43) Date de publication de la demande: 10.08.2011
(73) Titulaire: Thales, 92400 Courbevoie (FR)
(72) Inventeur: BIGAND, Jean-Louis, F-41100 Vendome (FR)
(74) Mandataire: Collet, Alain
(86) Numéro de dépôt international: PCT/EP2009/064467
(87) Numéro de publication internationale: WO 2010/060743

(56) Documents cités:
- EP-A1- 0 446 088
- EP-A1- 0 685 860
- EP-A1- 1 722 385
- US-A- 5 655 826
- US-A1- 2001 032 779
- US-A1- 2006 225 995

## Description

L'invention se rapporte à la prise en compte des dispersions géométriques d'un clavier, à son étanchéité, à son rétroéclairage et à l'allongement de la course de ses touches. L'invention trouve une utilité particulière, mais non exclusive, dans une planche de bord d'un aéronef.

Un clavier rétroéclairé comprend habituellement au moins un interrupteur surmonté d'une touche, une face avant comportant une ouverture traversée par la touche et une source lumineuse associée à un diffuseur s'étendant entre l'interrupteur et la touche et comprenant pour chaque touche une ouverture permettant le contact entre la touche et l'interrupteur associé. Un opérateur peut appuyer sur la surface supérieure de la touche pour manoeuvrer l'interrupteur. L'interrupteur et la touche forment des pièces mobiles qui sont sensibles à la pénétration de particules solides ou liquides susceptibles d'altérer le fonctionnement du clavier. La présence de ces particules nécessite un nettoyage du clavier, voire un remplacement des pièces mobiles endommagées. Pour pallier ce problème, plusieurs solutions ont été envisagées afin de réaliser une étanchéité du clavier.

Une première solution consiste à disposer un film souple au-dessus des touches. Cette solution présente un inconvénient pour l'opérateur dans la mesure où il distingue plus difficilement les touches les unes des autres, que ce soit de façon tactile ou visuelle. D'une part, le film souple lisse les aspérités des touches et, d'autre part, il introduit un milieu entre la touche rétroéclairé et l'opérateur. Ce milieu, s'il n'est pas plaqué contre les touches, diffuse les rayons lumineux provenant des inscriptions des touches rétroéclairées et rend ces inscriptions illisibles par l'opérateur. Le film souple nuit donc à la précision de commande des interrupteurs. Cette précision est particulièrement nécessaire, par exemple, sur une planche de bord d'aéronef. Le pilote utilisant le clavier de cette planche de bord doit pouvoir entrer des données relatives au pilotage de l'aéronef avec une fiabilité parfaite et la présence du film souple dégrade cette fiabilité. Cette première solution présente également l'inconvénient de nécessiter un ajustement précis de l'assemblage du clavier afin de garantir, pour chaque touche, un bon alignement entre l'ouverture dans la face avant, l'ouverture dans le diffuseur et l'interrupteur associés à la touche considérée. En cas de mauvais alignement, les touches risquent de se coincer et/ou de ne pas actionner les interrupteurs. Par conséquent, les claviers de grande dimension sont généralement constitués en plusieurs parties, chaque partie s'étendant sur une surface limitée afin de restreindre les dispersions géométriques entre les différentes pièces constitutives du clavier. La constitution d'un clavier en plusieurs parties pose évidemment un problème de complexité de réalisation et de montage.

Une deuxième solution, dérivée de la première, consiste à réaliser une ouverture pour chaque touche dans le film souple afin de faire ressortir les touches au-dessus du film souple, le film étant collé d'un côté sur les touches et de l'autre sur la face avant. Cette solution résout le problème de la précision de commande des interrupteurs, l'opérateur ayant directement accès à la touche, mais elle ne résout en rien le problème de la nécessité d'un ajustement précis de l'assemblage. En outre, une contrainte supplémentaire est imposée par la nécessité d'aligner pour chaque touche, en plus de l'ouverture dans la face avant, de l'ouverture dans le diffuseur et de l'interrupteur, l'ouverture réalisée dans le film souple.

Une troisième solution consiste à disposer le film souple entre les touches et les interrupteurs associés, soit au-dessus, soit en dessous du diffuseur. Cette solution résout également le problème de la précision de commande des interrupteurs, mais elle ne résout en rien le problème de la nécessité d'un ajustement précis de l'assemblage.

Le document US 2006/0225995 A1 décrit un clavier rétroéclairé étanche comportant une plaque transparente dans laquelle est formé un guide de lumière entre la diode et la touche. Le document EP 0 685 860 A1 décrit un clavier rétroéclairé dans lequel des diodes sont disposées sous la touche, la membrane élastique transmettant la lumière des diodes vers les touches. Les documents US 5 655 826 A et EP 1 722 385 A1 décrivent des claviers rétroéclairés dans lesquels les diodes ne se trouvent pas directement sous les touches.

Un but de l'invention est notamment de pallier tout ou partie des inconvénients précités en fournissant un clavier rétroéclairé étanche dans lequel les sources lumineuses assurant le rétroéclairage ne sont pas situées directement sous les touches mais en sont plus ou moins éloignées. A cet effet, l'invention a pour objet un clavier tel que décrit dans les revendications.

L'invention a notamment pour avantage qu'elle regroupe les fonctions d'étanchéité du clavier et de diffusion de la lumière entre la source lumineuse et la touche en une seule pièce homogène. Elle est donc de conception simple et économique.

L'invention sera mieux comprise et d'autres avantages apparaîtront à la lecture de la description détaillée d'un mode de réalisation donné à titre d'exemple, description faite en regard de dessins annexés qui représentent :

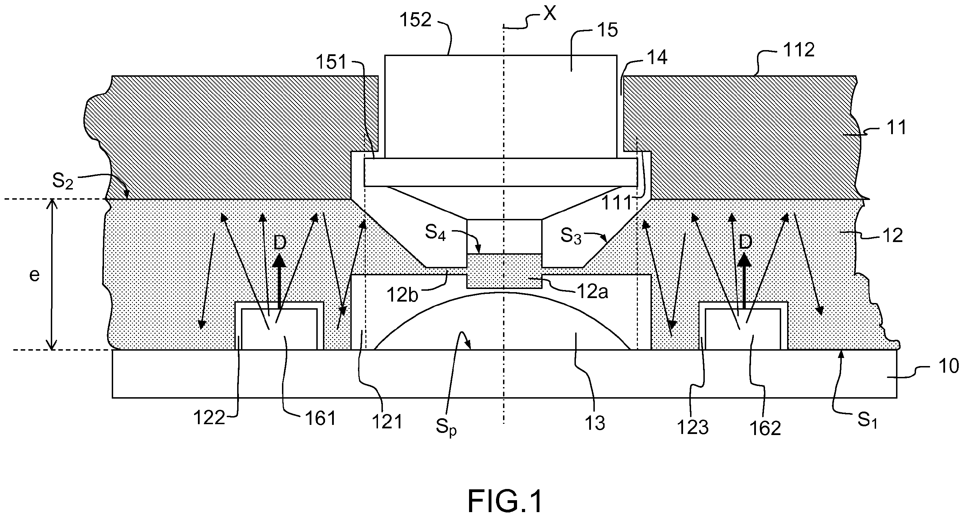

- la figure 1, un exemple de réalisation d'un clavier dans une vue en coupe selon un plan passant par une touche du clavier.

La description qui suit est faite en référence à une partie d'un clavier comportant un seul interrupteur surmonté d'une touche. Bien entendu, l'invention ne se limite pas à un clavier comportant un seul interrupteur et une seule touche mais est particulièrement bien adaptée à un clavier comportant un grand nombre d'interrupteurs surmontés chacun d'une touche.

La figure 1 représente un exemple de réalisation d'un clavier selon l'invention dans une vue en coupe d'une partie du clavier selon un plan passant par une touche. Le clavier comporte un circuit imprimé 10 formant un support 10, une face avant 11 et une pièce 12 interposée entre le circuit imprimé 10 et la face avant 11. La pièce 12 peut comprendre une première surface S₁ en appui sur le circuit imprimé 10 et une deuxième surface S₂ en appui sur la face avant 12. Un interrupteur 13 à poussoir est monté sur le circuit imprimé 10. Le circuit imprimé 10 comprend alors des pistes électriques, non représentées, permettant le fonctionnement de l'interrupteur 13. L'interrupteur 13 est par exemple un interrupteur du type dit "à dôme" ou "cloquant", c'est-à-dire où la commutation s'effectue par déflexion d'un dôme cloquant élastique conducteur entre deux conducteurs à relier. Ce type d'interrupteur est connu dans la littérature anglo-saxonne sous le terme de "dome switch". La face avant 11 comporte une ouverture 14 traversée par une touche 15 et débouchant sur la pièce 12. Avantageusement, une forme de l'ouverture 14 est déterminée de manière à guider en translation la touche 15 suivant un axe X et à manoeuvrer l'interrupteur 13. La pièce 12 peut comprendre une cavité 121 formée sur la première surface S₁ et apte à recevoir l'interrupteur 13. La pièce 12 forme alors des moyens d'étanchéité pour l'interrupteur 13 en empêchant des particules situées à l'extérieur du clavier, c'est-à-dire là où est situé l'opérateur, d'atteindre l'interrupteur 13 par l'espace laissé libre entre la touche 15 et l'ouverture 14.

L'interrupteur 13 est manoeuvré par la touche 15 par l'intermédiaire d'une partie 12a de la pièce 12. Pour permettre à la touche 15 de manoeuvrer l'interrupteur 13, la pièce 12 doit présenter au moins une partie déformable. Selon l'invention, la pièce 12 est monobloc, c'est-à-dire qu'elle est réalisée en une seule pièce sans assemblage, par exemple par moulage. La pièce 12 est en matériau élastique, par exemple en élastomère. Par conséquent, la partie 12a et la zone de la pièce 12 située autour de cette partie 12a peuvent être déformées élastiquement lors d'un appui sur la touche 15, la partie 12a venant alors en appui sur la partie déformable de l'interrupteur 13. Selon une forme particulière de réalisation, la partie 12a forme un bloc, par exemple cylindrique d'axe longitudinal l'axe X, et la pièce 12 comprend une membrane 12b entourant le bloc. Cette forme particulière de réalisation permet à la pièce 12 de réaliser la fonction d'un plongeur. Un plongeur peut être défini comme un élément déformable élastiquement situé entre la touche 15 et l'interrupteur 13 et permettant d'allonger une course de la touche 15. L'allongement de la course de la touche 15 est nécessaire lorsqu'une course de l'interrupteur 13 est inférieure à la course minimale imposée pour la touche 15. Dans le domaine aéronautique notamment, les interrupteurs à dôme sont fréquemment employés. Cependant, la course d'un interrupteur à dôme est rarement supérieure à trois dixièmes de millimètres alors que la course d'une touche 15 est généralement comprise entre sept et dix dixièmes de millimètres. La forme de réalisation selon laquelle la pièce 12 comprend un bloc et une membrane 12b autour de ce bloc permet, lors d'un appui sur la touche 15, de comprimer le bloc entre la touche 15 et l'interrupteur 13 sans déformer notablement le reste de la pièce 12. L'effort pouvant être appliqué sur la touche 15 avant d'actionner l'interrupteur 13 peut ainsi être déterminé simplement par la connaissance de la forme du bloc et par la dureté du matériau constituant la pièce 12.

Toujours selon une forme particulière de réalisation, le clavier comprend des moyens pour limiter une course de la touche 15 dans le sens opposé au sens de manoeuvre de l'interrupteur 13. Ces moyens comprennent par exemple un épaulement 151 réalisé sur la touche 15 et un lamage 111 réalisé sur la face avant 11, l'épaulement 151 étant destiné à venir en appui sur le fond du lamage 111. La partie 12a peut être précontrainte entre la touche 15 et l'interrupteur 13 afin de garantir le plaquage de la touche 15 contre la face avant 11. Le plaquage évite que les touches 15 ne vibrent contre la face avant 11 et garantit un dépassant de touche constant quelles que soient les dispersions géométriques de l'assemblage du circuit imprimé 10, de la pièce 12 et de la face avant 11. On appelle dépassant de touche la différence de hauteur entre une surface supérieure 152 de la touche 15 et une surface extérieure 112 de la face avant 11.

Afin d'assurer un rétroéclairage du clavier, celui-ci comprend au moins une source lumineuse 16. Par rétroéclairage, on entend un éclairage par l'intérieur ou par le dessous du clavier, par opposition à un éclairage de face. La touche 15 est par exemple transparente et sa surface supérieure 152 recouverte partiellement d'un revêtement opaque tel que de la peinture de manière à former des inscriptions. Ces inscriptions consistent par exemple en des caractères alphanumériques. Avantageusement, la surface supérieure 152 de la touche 15 est entièrement recouverte du revêtement opaque et les inscriptions sont formées en enlevant localement le revêtement opaque, par exemple par gravure. Les inscriptions des touches 15 sont alors visibles par transparence et non par réflexion. Dans un clavier comportant plusieurs touches 15, les sources lumineuses 16 sont généralement multipliées afin d'obtenir une luminosité sensiblement homogène sur toute la surface du clavier et donc pour chaque touche 15. Dans l'exemple de réalisation de la figure 1, la partie de clavier représentée comprend deux sources lumineuses 161 et 162 montées sur le circuit imprimé 10. Ces sources lumineuses 161 et 162 sont décalées de l'axe X sur lequel se trouve l'interrupteur 13. Autrement dit, les sources lumineuses 161 et 162 ne se trouvent pas sur l'axe X de manoeuvre de l'interrupteur 13. En l'occurrence, les sources lumineuses 161 et 162 ne sont ni intégrées à l'interrupteur 13, ni situées en dessous de l'interrupteur 13 sur l'axe X. Plus précisément, les dimensions maximales de la touche 15 définissent, par projection selon l'axe X, une surface Sₚ sur le circuit imprimé 10, et les sources lumineuses 161 et 162 sont montées sur le circuit imprimé 10 en dehors de cette surface Sₚ. Cette configuration présente l'avantage que toute la surface Sₚ peut être dédiée à l'interrupteur 13. Ainsi, dans un clavier, les interrupteurs peuvent avoir des dimensions similaires à celles des touches, ce qui libère des contraintes sur le choix des interrupteurs et sur la dimension minimale des touches. Le circuit imprimé 10 comprend des pistes électriques, non représentées, permettant l'alimentation électrique des sources lumineuses 161 et 162. Les sources lumineuses 161 et 162 peuvent être des lampes à filament, des diodes électroluminescentes ou tout autre moyen d'éclairage. La pièce 12 peut comprendre des cavités 122 et 123 formées sur la première surface S₁ et aptes à recevoir chacune une source lumineuse 161 ou 162. Selon l'invention, la pièce 12 est transparente, ou tout au moins translucide, afin de laisser passer les rayons lumineux provenant des sources lumineuses 161 et 162 vers la touche 15 avec une faible atténuation. Selon une forme particulière de réalisation, par exemple représentée à la figure 1, le clavier est configuré de manière à permettre des réflexions multiples des rayons lumineux sur les surfaces S₁ et S₂ de la pièce 12, depuis les sources lumineuses 161 et 162 vers la touche 15. En particulier, la pièce 12 présente une épaisseur e entre ses surfaces S₁ et S₂ suffisante pour permettre des réflexions multiples des rayons lumineux sur ces surfaces S₁ et S₂. L'épaisseur e forme une surépaisseur par rapport à la membrane 12b. Cette surépaisseur est notamment présente entre la touche 15 et les sources lumineuses 161 et 162. La pièce 12 remplace ainsi avantageusement un diffuseur, notamment en homogénéisant l'intensité lumineuse en tout point du clavier. La présence d'un diffuseur permet d'obtenir un clavier de conception plus simple. En particulier, les sources lumineuses ne nécessitent pas d'être disposées à proximité des touches et peuvent être disposées plus librement. De plus, le clavier peut comporter moins de sources lumineuses que de touches, une source lumineuse pouvant éclairer plusieurs touches. Le nombre de connexions électriques prévues pour les sources lumineuses en est également réduit. Par ailleurs, une surface S₃ de la pièce 12 en regard de la touche 15, et formant un dioptre entre la pièce 12 et l'air environnant la touche 15, peut être localement sensiblement perpendiculaire à une droite passant par la touche 15 et les sources lumineuses 161 et 162 afin de maximiser la transmission des rayons lumineux au niveau de la surface S₃. En tout état de cause, une inclinaison de la surface S3 peut être déterminée de manière à ce que les rayons lumineux issus directement des sources lumineuses 161 et 162 ne rentrent pas dans l'angle limite de réfraction. La surface S₃ est par exemple de révolution autour de l'axe X de manière à former une fraisure. Les rayons lumineux se trouvent ainsi guidés vers la touche 15. Avantageusement, la pièce 12 est recouverte partiellement d'un revêtement réfléchissant augmentant le rendement lumineux du rétroéclairage. Le revêtement réfléchissant est par exemple une peinture blanche. Il est notamment appliqué sur les surfaces S₁ et S₂ respectivement en contact avec le circuit imprimé 10 et avec la face avant 11 de manière à augmenter le coefficient de réflexion sur ces surfaces. Autrement dit, le revêtement réfléchissant est appliqué sur la surface S₁ et sur la surface qui lui est parallèle pour permettre des réflexions multiples. La fonction de diffuseur assurée par la pièce 12 est ainsi renforcée. Le revêtement n'est évidemment pas appliqué sur les surfaces de la pièce 12 permettant le passage des rayons lumineux vers la touche 15. En l'occurrence, la surface S₃ de la pièce 12 en regard de la touche 15 et la surface S₄ de la partie 12a en contact avec la touche 15 ne sont pas recouvertes du revêtement réfléchissant. Selon une forme particulière de réalisation, le revêtement réfléchissant est lui-même recouvert d'un revêtement opaque tel qu'une peinture noire. Ce revêtement opaque bloque les rayons lumineux éventuellement transmis par le revêtement réfléchissant afin d'augmenter le contraste entre les inscriptions des touches 15 et les autres parties du clavier. Selon une forme particulière de réalisation, les sources lumineuses 161 et 162 sont montées sur le circuit imprimé 10 de telle manière qu'une direction où leur intensité est maximale, notée D sur la figure 1, est sensiblement parallèle à l'axe X. Cette forme de réalisation permet également de simplifier la conception du clavier en permettant une disposition conventionnelle des sources lumineuses, c'est-à-dire dans le plan du circuit imprimé 10.

En résumé, la pièce 12 peut remplir trois fonctions de façon simple, économique et fiable, à savoir assurer l'étanchéité du clavier, augmenter la course de la touche 15 et diffuser les rayons lumineux entre les sources lumineuses 161 et 162 et la touche 15. La combinaison de ces fonctions est notamment rendue possible par l'utilisation d'un matériau élastique transparent et par une forme judicieuse de la pièce 12.

## Revendications

1. Clavier comportant un support (10), un interrupteur (13) à poussoir solidaire du support (10), une touche (15) permettant de manoeuvrer l'interrupteur (13) à poussoir selon un axe (X) et une source lumineuse (161, 162), les dimensions maximales de la touche (15) définissant par projection selon l'axe (X) une surface donnée (Sₚ) sur le support (10), le clavier comprenant, en outre, une pièce (12) monobloc en matériau élastique interposée entre la touche (15) et l'interrupteur (13) à poussoir, la pièce (12) assurant une étanchéité entre l'interrupteur (13) à poussoir et un environnement extérieur et étant apte à guider des rayons lumineux de la source lumineuse (161, 162) vers la touche (15) afin d'assurer un rétroéclairage de la touche (15), la source lumineuse (161, 162) étant montée sur le support (10) en dehors de la surface donnée (Sₚ), le clavier étant **caractérisé en ce qu'**une surface (S₃) de la pièce (12) en regard de la touche (15) est localement sensiblement perpendiculaire à une droite passant par la touche (15) et la source lumineuse (161, 162).

2. Clavier selon la revendication 1, **caractérisé en ce que** la pièce (12) comprend un bloc (12a) entre la touche (15) et l'interrupteur (13) à poussoir et une membrane (12b) autour de ce bloc (12a), le bloc (12a) étant apte à se déformer élastiquement afin d'allonger une course de la touche (15).

3. Clavier selon l'une quelconque des revendications 1 ou 2, **caractérisé en ce que** la pièce (12) comprend une membrane (12b) et une surépaisseur par rapport à la membrane (12b) entre la source lumineuse (161, 162) et la touche (15).

4. Clavier selon l'une quelconque des revendications précédentes, **caractérisé en ce que** la source lumineuse (161, 162) est montée sur le support (10) de telle manière qu'une direction (D) où son intensité lumineuse est maximale est sensiblement parallèle à l'axe (X) de manoeuvre de l'interrupteur (13).

5. Clavier selon l'une quelconque des revendications précédentes, **caractérisé en ce que** le clavier comporte, en outre, une face avant (11) comprenant une ouverture (14) traversée par la touche (15) et **en ce que** la pièce (12) comprend une première surface (S₁) en appui sur le support (10) et une deuxième surface (S₂) en appui sur la face avant (11).

6. Clavier selon la revendication 5, **caractérisé en ce que** la pièce (12) comprend une première cavité (121) apte à recevoir l'interrupteur (13) à poussoir et une deuxième cavité (122, 123) apte à recevoir la source lumineuse (161, 162), les cavités (121, 122, 123) étant formées sur sa première surface (S₁).

7. Clavier selon l'une quelconque des revendications précédentes, **caractérisé en ce que** la pièce (12) comprend une première surface (S₁) en appui sur le support (10) et **en ce qu'**elle est recouverte d'un revêtement réfléchissant au niveau de cette première surface (S₁) et au niveau d'une deuxième surface (S₂) parallèle à la première surface (S₁).

8. Clavier selon la revendication 7, **caractérisé en ce que** le revêtement réfléchissant est lui-même recouvert d'un revêtement opaque.

9. Clavier selon l'une quelconque des revendications précédentes, **caractérisé en ce que** le support (10) est un circuit imprimé (10).

10. Clavier selon l'une quelconque des revendications précédentes, **caractérisé en ce qu'**il comprend des moyens (111, 151) pour limiter une course de la touche (15) dans le sens opposé au sens de manoeuvre de l'interrupteur (13) à poussoir, la pièce (12) étant précontrainte entre la touche (15) et l'interrupteur (13) à poussoir.

11. Clavier selon l'une quelconque des revendications précédentes, **caractérisé en ce que** la pièce (12) est en matériau élastomère.

## Patentansprüche

1. Tastenfeld, das eine Auflage (10), einen Druckschalter (13) einstückig mit der Auflage (10), eine Taste (15), die eine Bewegung des Druckschalters (13) entlang einer Achse (X) zulässt, und eine Lichtquelle (161, 162) umfasst, wobei die maximalen Abmessungen der Taste (15), durch Projektion entlang der Achse (X), eine gegebene Oberfläche (Sₚ) auf der Auflage (10) definieren, wobei das Tastenfeld ferner ein integrales Teil (12) aus flexiblem Material umfasst, das sich zwischen der Taste (15) und dem Druckschalter (13) befindet, wobei das Teil (12) eine Dichtung zwischen dem Druckschalter (13) und einer Außenumgebung bildet und zum Leiten von Lichtstrahlen von der Lichtquelle (161, 162) zu der Taste (15) ausgelegt ist, um eine Hintergrundbeleuchtung für die Taste (15) zu bilden, wobei die Lichtquelle (161, 162) auf der Auflage (10) außerhalb der gegebenen Fläche (Sₚ) montiert ist, wobei das Tastenfeld **dadurch gekennzeichnet ist, dass** eine Oberfläche (S₃) des Teils (12) gegenüber der Taste (15) lokal im Wesentlichen senkrecht zu einer Geraden ist, die durch die Taste (15) und die Lichtquelle (161, 162) verläuft.

2. Tastenfeld nach Anspruch 1, **dadurch gekennzeichnet, dass** das Teil (12) einen Block (12a) zwischen der Taste (15) und dem Druckschalter (13) und eine Membran (12b) um den Block (12a) umfasst, wobei der Block (12a) so ausgelegt ist, dass er sich flexibel verformt, um eine Wegstrecke der Taste (15) zu verlängern.

3. Tastenfeld nach Anspruch 1 oder 2, **dadurch gekennzeichnet, dass** das Teil (12) eine Membran (12b) und eine Überdicke relativ zu der Membran (12b) zwischen der Lichtquelle (161, 162) und der Taste (15) umfasst.

4. Tastenfeld nach einem der vorherigen Ansprüche, **dadurch gekennzeichnet, dass** die Lichtquelle (161, 162) so auf der Auflage (10) montiert ist, dass eine Richtung (D), in der ihre Lichtintensität maximal ist, im Wesentlichen parallel zur Bewegungsachse (X) des Druckschalters (13) ist.

5. Tastenfeld nach einem der vorherigen Ansprüche, **dadurch gekennzeichnet, dass** das Tastenfeld ferner eine Frontfläche (11) umfasst, die eine Öffnung (14) aufweist, durch die die Taste (15) passiert, und dadurch, dass das Teil (12) eine erste Fläche (S₁) in Anlage an der Auflage (10) und eine zweite Fläche (S₂) in Anlage an der Frontfläche (11) aufweist.

6. Tastenfeld nach Anspruch 5, **dadurch gekennzeichnet, dass** das Teil (12) einen ersten Hohlraum (121) zum Aufnehmen des Druckschalters (13) und einen zweiten Hohlraum (122, 123) zum Aufnehmen der Lichtquelle (161, 162) umfasst, wobei die Hohlräume (121, 122, 123) auf seiner ersten Fläche (S₁) ausgebildet sind.

7. Tastenfeld nach einem der vorherigen Ansprüche, **dadurch gekennzeichnet, dass** das Teil (12) eine erste Fläche (S₁) in Anlage an der Auflage (10) umfasst, und dadurch, dass er mit einer reflektierenden Beschichtung auf der ersten Fläche (S₁) und auf einer zweiten Fläche (S₂) parallel zu der ersten Fläche (S₁) bedeckt ist.

8. Tastenfeld nach Anspruch 7, **dadurch gekennzeichnet, dass** die reflektierende Beschichtung wiederum mit einer opaken Beschichtung bedeckt ist.

9. Tastenfeld nach einem der vorherigen Ansprüche, **dadurch gekennzeichnet, dass** die Auflage (10) eine gedruckte Schaltung (10) ist.

10. Tastenfeld nach einem der vorherigen Ansprüche, **dadurch gekennzeichnet, dass** es Mittel (111,151) zum Begrenzen einer Wegstrecke der Taste (15) in der Richtung entgegengesetzt zur Bewegungsrichtung des Druckschalters (13) umfasst, wobei das Teil (12) zwischen der Taste (15) und dem Druckschalter (13) vorgespannt ist.

11. Tastenfeld nach einem der vorherigen Ansprüche, **dadurch gekennzeichnet, dass** das Teil (12) aus einem elastomeren Material gefertigt ist.

## Claims

1. A keypad comprising a support (10), a push switch (13) integral with said support (10), a key (15) allowing said push switch (13) to be moved along an axis (X) and a light source (161, 162), the maximum dimensions of said key (15) defining, by projection along said axis (X), a given surface (Sₚ) on said support (10), said keypad further comprising an integral part (12) made of flexible material interposed between said key (15) and said push switch (13), said part (12) providing a seal between said push switch (13) and an external environment and being designed to guide light rays from said light source (161, 162) towards said key (15) in order to provide a backlight for said key (15), said light source (161, 162) being mounted on said support (10) outside said given surface (Sₚ), said keypad being **characterised in that** a surface (S₃) of said part (12) facing said key (15) is locally substantially perpendicular to a line passing through said key (15) and said light source (161, 162).

2. The keypad according to claim 1, **characterised in that** said part (12) comprises a block (12a) between said key (15) and said push switch (13) and a membrane (12b) around said block (12a), said block (12a) being designed to flexibly deform in order to extend a travel of said key (15).

3. The keypad according to claim 1 or 2, **characterised in that** said part (12) comprises a membrane (12b) and an overthickness relative to said membrane (12b) between said light source (161, 162) and said key (15).

4. The keypad according to any one of the preceding claims, **characterised in that** said light source (161, 162) is mounted on said support (10) so that a direction (D) where its light intensity is maximum is substantially parallel to said axis of movement (X) of said push switch (13).

5. The keypad according to any one of the preceding claims, **characterised in that** said keypad further comprises a front face (11) comprising an opening (14), through which said key (15) passes, and **in that** said part (12) comprises a first surface (S₁) in abutment against said support (10) and a second surface (S₂) in abutment against said front face (11).

6. The keypad according to claim 5, **characterised in that** said part (12) comprises a first cavity (121) designed to receive said push switch (13) and a second cavity (122, 123) designed to receive said light source (161, 162), said cavities (121, 122, 123) being formed on its first surface (S₁).

7. The keypad according to any one of the preceding claims, **characterised in that** said part (12) comprises a first surface (S₁) in abutment against said support (10) and **in that** it is covered with a reflective coating on said first surface (S₁) and on a second surface (S₂) parallel to said first surface (S₁).

8. The keypad according to claim 7, **characterised in that** said reflective coating is itself covered with an opaque coating.

9. The keypad according to any one of the preceding claims, **characterised in that** said support (10) is a printed circuit (10).

10. The keypad according to any one of the preceding claims, **characterised in that** it comprises means (111, 151) for limiting a travel of said key (15) in the direction opposite the direction of movement of said push switch (13), said part (12) being pre-stressed between said key (15) and said push switch (13).

11. The keypad according to any one of the preceding claims, **characterised in that** said part (12) is made of elastomer material.
